Europäisches Patentamt

European Patent Office

Office européen des brevets

(11) Veröffentlichungsnummer: **0 324 152 B1**

(12) **EUROPÄISCHE PATENTSCHRIFT**

(45) Veröffentlichungstag der Patentschrift: **20.05.92**

(21) Anmeldenummer: **88121558.6**

(22) Anmeldetag: **23.12.88**

(51) Int. Cl.5: **F16D 25/12**, F16D 25/063

(54) **Flüssigkeitskupplung.**

(30) Priorität: **15.01.88 US 144847**

(43) Veröffentlichungstag der Anmeldung:
**19.07.89 Patentblatt 89/29**

(45) Bekanntmachung des Hinweises auf die
Patenterteilung:
**20.05.92 Patentblatt 92/21**

(84) Benannte Vertragsstaaten:
**DE FR GB IT**

(56) Entgegenhaltungen:
CH-A- 438 857         DE-B- 1 031 063
DE-B- 1 188 873       FR-A- 2 138 940
FR-A- 2 139 454       US-A- 3 265 175
US-A- 3 782 216       US-A- 4 261 455

(73) Patentinhaber: **DEERE & COMPANY**
**1 John Deere Road**
**Moline, Illinois 61265(US)**

(72) Erfinder: **Smemo, Alfred Sigmund**
**245 S. Grandview**
**Dubuque Iowa 52001(US)**
Erfinder: **Johannsen, Donald Orville**
**20456 Diagonal Street**
**Sherrill, Iowa 52073(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine flüssigkeitsbetätigbare Kupplung mit einem ersten Teil, einem an diesem angeordneten Zylinder, einem in dem Zylinder verstellbaren Kolben und einem radial innenliegenden Flüssigkeitskanal zum Beaufschlagen des Kolbens und des Zylinders mit Flüssigkeit, damit der Kolben aus einer inaktiven Stellung entgegen der Wirkung von Federn in eine aktivierte Stellung verstellt werden kann, in der der Kolben einen zweiten Teil mit dem ersten Teil reibschlüssig verbindet.

Derartige Kupplungen sind allgemein bekannt und werden in der Regel zum Schalten unter Last von Getrieben eingesetzt. Normalerweise werden solche Kupplungen mit Hydrauliköl betrieben, so daß bei Beaufschlagen des Kolbens dieser ausgefahren wird und über Reibscheiben und Pressplatten eine drehfeste Verbindung mit einem getriebenen Teil hergestellt wird. Die Druckbeaufschlagung erfolgt entgegen der Wirkung von Federn, so daß dann, wenn der Hydraulikdruck nachläßt bzw. nicht mehr vorhanden ist, die Federn den Kolben zurückdrängen und der Druckraum und gegebenenfalls auch die Flüssigkeitskanäle kein Druckmittel mehr enthalten. Damit muß beim Wiederbetätigen der Kupplung zunächst dieser Raum wieder mit Druckmedium gefüllt werden, wodurch zeitliche Verzögerungen und unstabile Schaltcharakteristika auftreten. Diese Nachteile machen sich um so stärker bemerkbar, je kleiner der Kanalquerschnitt der Flüssigkeitskanäle ist.

Die FR-A-2 139 454 offenbart eine flüssigkeitsbetätigbare Kupplung mit einem axial verstellbaren Kolben, an dessen Stirnfläche Vorsprünge vorgesehen sind, die in der inaktiven Stellung des Kolbens über Federn gegen eine innere Zylinderstirnfläche gedrückt werden. Hierdurch entsteht ein Mindestabstand zwischen Kolben und Zylinder mit einem Freiraum, der ein schnelleres Ansprechen der Kupplung bewirken soll. Dieser Freiraum ist aber in der inaktiven Stellung des Kolbens nicht mit Flüssigkeit befüllt, sondern mit aus dem Sammelbehälter angesaugter Luft, und muß beim Beaufschlagen der Kupplung erst entlüftet werden, wodurch ein verzögerungsfreies Ansprechen nicht möglich ist.

Die mit der Erfindung zu lösende Aufgabe wird darin gesehen, die Kupplung so auszubilden, daß sie möglichst verzögerungsfrei anspricht. Diese Aufgabe ist nach der Erfindung dadurch gelöst worden, daß zwischen der Stirnfläche des Kolbens und der gegenüberliegenden Wand des Zylinders eine umlaufende und ringförmige Dichtung derart vorgesehen ist, daß in der inaktiven Stellung die Dichtung Kolben und Zylinder auf Abstand hält und zwischen Dichtung, Kolben und Zylinder ein innerer und ein äußerer ringförmiger Freiraum entsteht, wobei in der inaktiven Stellung des Kolbens der radial innenliegende Freiraum an seinem äußeren Umfang durch die Dichtung geschlossen, zum Flüssigkeitskanal offen und ständig mit Flüssigkeit gefüllt ist und in der aktivierten Stellung des Kolbens die Wirkung der Dichtung aufgehoben ist.

Damit ist gewährleistet, daß die Federn den Kolben nicht bis ganz an die Stirnwand des Zylinders zurückdrücken können, so daß hier ein Freiraum entsteht, der ständig, auch wenn die Kupplung nicht betätigt ist, mit Flüssigkeit gefüllt ist, wodurch die Ansprechzeit der Kupplung erheblich verringert wird, da ein Auffüllen der Flüssigkeitskanäle bzw. der Räume zwischen Kolben und Zylinder nicht erforderlich ist.

Zweckmäßig kann der Zylinder einen mit Bezug auf die Antriebswelle konzentrisch angeordneten Ringraum bilden, in dem der ringförmig ausgebildete Kolben längsverstellbar ist.

Vorteilhaft ist nach der Erfindung die Dichtung als ringförmiger, konzentrisch zur Antriebswelle angeordneter, entweder mit der Stirnseite des Kolbens oder mit der dieser gegenüberliegenden Stirnseite des Zylinders verbundener Dichtsteg ausgebildet, der über die Federn dicht gegen die Stirnseite des Zylinders oder des Kolbens gedrückt wird, so daß in der Regel zwischen den beiden Freiräumen kein Druckmittel durchtreten kann. Da es aber nicht auszuschließen ist, daß dennoch in diesem Bereich Lecköl austritt, wird nach der Erfindung ferner vorgeschlagen, daß der äußere Freiraum mit wenigstens einer Ablaßöffnung versehen ist.

Wird die Kupplung nicht druckbeaufschlagt, so kann die Flüssigkeit drucklos in einen Sammelbehälter zurückfließen. Damit aber bei nicht betätigter Kupplung sich auch in dem ersten Freiraum ein gewisser Flüssigkeitsdruck ständig aufbaut und dort gehalten wird, ist nach der Erfindung ferner vorgesehen, daß der Flüssigkeitskanal aus einem in der Antriebswelle angeordneten Kanal und einem in einem Kupplungsgehäuse angeordneten Kanal gebildet ist, wobei ein Kanal zum Schmieren der Kupplung nahe dem Flüssigkeitskanal derart angeordnet ist, daß Schmierflüssigkeit in den Flüssigkeitskanal rinnen kann. Diese Schmierflüssigkeit füllt dann auch den ersten Freiraum, so daß beim nachträglichen Beaufschlagen der Kupplung diese fast verzögerungsfrei anspricht und nur so viel Druck benötigt wird, wie es zum Verschieben des Kolbens erforderlich ist.

In einfacher Weise wird der Dichtsteg durch Abdrehen der Stirnseite des Kolbens gebildet.

Letztlich kann nach der Erfindung der innere Freiraum derart angeordnet sein, daß die von der umlaufenden Schmierflüssigkeit im Freiraum hervorgerufene axiale Kraftkomponente kleiner ist als die Kraft der Federn, damit nicht ein ungewolltes Einrücken der Kupplung erfolgt.

In der Zeichnung ist ein nachfolgend näher erläutertes Ausführungsbeispiel der Erfindung dargestellt. Es zeigt:

Fig. 1    eine Flüssigkeitskupplung im Schnitt und

Fig. 2    den Dichtsteg im größeren Maßstab.

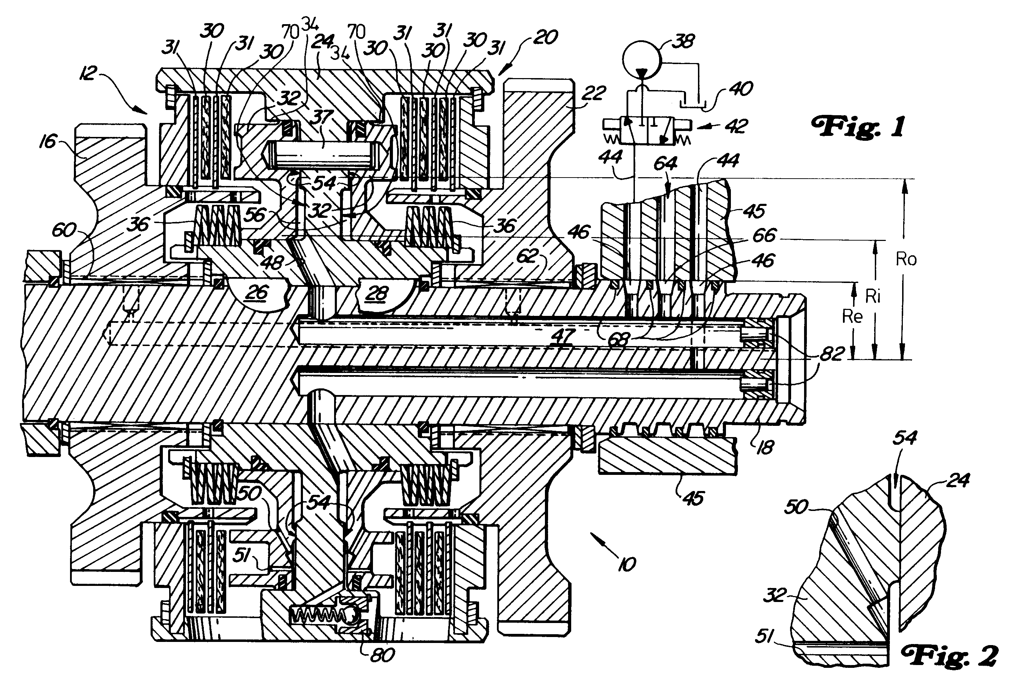

In Fig. 1 der Zeichnung ist eine Flüssigkeitskupplung 10 für ein unter Last schaltbares Getriebe dargestellt, wie es beispielsweise in Raupenkettenfahrzeugen Verwendung finden kann. Die Flüssigkeitskupplung 10 besteht im einzelnen aus einer ersten Kupplung 12, die wahlweise ein getriebenes Teil 16 mit einer Antriebswelle 18 verbindet bzw. diese Verbindung wieder löst. Die Flüssigkeitskupplung ist ferner noch mit einer zweiten Kupplung 20 versehen, die ein weiteres getriebenes Teil 22 ebenfalls mit der Antriebswelle 18 verbinden bzw. diese Verbindung wieder lösen kann. Die getriebenen Teile 16 und 22 sind in der Form von Zahnrädern ausgebildet bzw. können solche aufnehmen, die ihrerseits wieder wirkungsmäßig mit anderen Zahnrädern, die der Einfachheit halber in der Zeichnung nicht dargestellt sind, in Verbindung stehen, um Ausgangsdrehzahlen für das Getriebe schalten zu können.

Die beiden Kupplungen 12 und 20 sind in einer Kupplungstrommel 24 angeordnet, die drehfest mit der Antriebswelle 18 über Keile 26 und 28 verbunden ist. Die erste Kupplung 12 ist dabei mit einer Vielzahl von Reibscheiben 30 und Druckplatten 31 sowie einem hydraulisch beaufschlagbaren Kolben 32 versehen, der seinerseits in einem Zylinder 34 angeordnet ist, wobei Tellerfedern 36 an der Kupplungstrommel 24 derart angeordnet sind, daß sie bestrebt sind, den Kolben in seine ausgerückte Stellung zu verschieben, die in den Ansprüchen als die inaktive Stellung bezeichnet ist. Der Kolben 32 kann axial auf Stiften 37, von denen lediglich einer in der Zeichnung dargestellt ist, verschoben werden, wobei die Stifte ebenfalls in die Kupplungstrommel 24 eingesetzt sind. Um die Kupplung zu betätigen, wird hydraulische Flüssigkeit von einer Pumpe 38 aus einem Sammelbehälter 40 angesaugt und über ein Ventil 42 und einen Kanal 44 gepumpt. Der Kanal 44 ist in einem Gehäuse 45 des Getriebes vorgesehen, und von dort fließt die hydraulische Flüssigkeit in eine Ringnut 46, die in der Antriebswelle 18 vorgesehen ist, weiter in einen Kanal 47, der sich in Längsrichtung innerhalb der Antriebswelle erstreckt. Danach gelangt die Druckflüssigkeit durch einen Kanal 48 zu dem Kolben 32 bzw. Zylinder 34, wobei der Kanal 48 in der Kupplungstrommel vorgesehen ist. Der sich hier aufbauende Druck schiebt den Kolben 32 gegen die Wirkung der Feder nach außen, wodurch die Reibscheiben gegen die Druckplatten gepreßt werden, wodurch eine reibschlüssige Verbindung der Antriebswelle mit dem getriebenen Teil 16 entsteht.

Der hydraulische Kreislauf zum Beaufschlagen der Kupplung, wie er in Fig. 1 dargestellt ist, ist eine vereinfachte Ausführung, und mehr ausgefeilte Ausbildungen sind dem Durchschnittsfachmann durchaus geläufig.

Der Kolben 32 ist noch mit Ablaßöffnungen 50 und 51 versehen, wobei die Ablaßöffnung 50 dazu dient, daß Luft zur äußeren Peripherie des Zylinders austreten kann, wohingegen die Ablaßöffnung 51 der hydraulischen Flüssigkeit die Möglichkeit gibt, aus dem Zylinder auszutreten und den Axialdruck auf den Kolben zu verringern, der durch die rotierende hydraulische Flüssigkeit hervorgerufen wird. Bei einigen herkömmlichen Kupplungen wurde, nachdem die Kupplung ausgerückt wurde, die hydraulische Flüssigkeit durch die Feder 36 zurück durch die Flüssigkeitskanäle zum Sammelbehälter 40 gedrückt. Hydraulische Flüssigkeit, die noch in den Kanälen verblieb, wurde dann über die Zentrifugalkraft in den Zylinder gedrückt, wo sie dann aus dem Zylinder austreten konnte. Damit waren solche Flüssigkeitskanäle leer, wenn die Kupplung beim nächsten Mal wieder eingerückt wurde, und es war nötig, daß sie zunächst wieder aufgefüllt wurden, bevor der Kolben wieder gegen die Feder verschoben werden konnte.

Mit der vorliegenden Erfindung wird dieses Problem dadurch gelöst, daß eine Dichtvorrichtung bzw. eine Dichtung zwischen der Stirnfläche des Kolbens und der Zylinderwand vorgesehen ist. Im einzelnen besteht diese Dichtung im Ausführungsbeispiel aus einem Dichtsteg 54, der in die außen liegende Stirnwand des Kolbens eingedreht wurde. Der Dichtsteg ist ringförmig ausgebildet, wobei seine Mitte der Längsachse der Antriebswelle 18 entspricht. Der ringförmige Dichtsteg bildet eine Dichtung, die es verhindert, daß Flüssigkeit nach außen zu den Ablaßöffnungen in der ausgerückten Stellung der Kupplung gelangt. Der Dichtsteg 54 bildet zusammen mit der Stirnfläche des Zylinders 34 bzw. mit der Stirnfläche 70 der Kupplungstrommel einen inneren Freiraum bzw. Teil 56, der hydraulische Flüssigkeit enthält und der auch noch mit dieser hydraulischen Flüssigkeit gefüllt ist, nachdem die Kupplung ihre inaktive Stellung eingenommen hat, d. h. nicht mehr mit Druck beaufschlagt wird. Selbstverständlich kann der Dichtsteg auch durch Abdrehen der Zylinderstirnfläche gebildet werden.

Obwohl im Einsatz die Federn den Kolben bei nicht betätigter Kupplung über seinen Dichtsteg fest gegen den Zylinder drücken, kann es dennoch vorkommen, daß etwas hydraulische Flüssigkeit in dem Kanal und dem Teil 56 über den Dichtsteg 54 oder andere Dichtvorrichtungen auslecken kann. Daher ist es zweckmäßig, den Flüssigkeitskanal und den Zylinder ständig wieder aufzufüllen, wozu Schmierflüssigkeit herangezogen wird. Schmierflüssigkeit wird in der Regel zu Lagerflächen 60 und 62 durch einen Kanal 64 gelangen. Ebenfalls wie der Kanal 44 ist der Kanal 64 zur Schmierung mit einer Ringnut 66 auf der Antriebswelle 18 versehen. Dichtungen 68, die zwischen den Ringnuten vorgesehen sind, sind zweckmäßig als Stahlringdichtungen ausgebildet, so daß sie nicht 100 %ig abdichten und Flüssigkeit über diese Dichtungen 68 rinnen kann. Wenn die Kupplungen sich in ihren inaktiven Stellungen befinden, ist der Hydraulikdruck in den Flüssigkeitskanälen praktisch 0, wobei jedoch der Kanal für das Schmiermittel unter Druck steht, um Schmierflüssigkeit zu den Oberflächen der Lager zu drücken. Dabei rinnt Schmierflüssigkeit an den Dichtungen 68 vorbei und kann in den Kanal 44 gelangen, wodurch dieser Kanal und nachfolgend auch der Zylinder bzw. der dort vorgesehene Freiraum wieder mit Öl beaufschlagt werden. Dadurch bleiben der Kanal 44 und der Teil 56 bzw. der Freiraum, der durch den Dichtsteg 54 gebildet wird, mit Öl gefüllt und können somit wesentlich schneller aktiviert werden, da lediglich ein extrem geringer Teil des Zylinders gegebenenfalls nicht mit Öl gefüllt ist. Daher braucht, damit die Kupplung ansprechen kann, im wesentlichen nur so viel Druckflüssigkeit zugeführt zu werden, wie es erforderlich ist, um den Kolben zu verschieben, d. h. eine Flüssigkeitsmenge für einen Kolbenschub reicht aus.

Die zweite Kupplung 20 arbeitet in gleicher Weise wie die erste Kupplung 12. Sie kann unabhängig oder gemeinsam mit der Kupplung 12 betätigt werden.

Beide Kupplungen sind ferner mit zentrifugalen Entlastungsventilen 80 versehen, wobei lediglich das Ventil 80 für die Kupplung 20 dargestellt ist. Beide Ventile stehen in Flüssigkeitsverbindung mit den Zylindern. Die Dichtungskugeln dieser Ventile werden abgehoben, wenn sie radial nach außen durch die Zentrifugalkraft der Kupplungstrommel bewegt werden. Diese Ventile sind so ausgebildet, daß sie den Zylinder entlüften, und sind besonders von Nutzen, wenn die Ablaßöffnungen verstopft oder nicht in der Lage sind, die hydraulische Flüssigkeit austreten zu lassen. Auch die Antriebswelle 18 ist mit Stopfen 82 versehen, die dazu dienen, die beiden in der Antriebswelle für die Kupplungen 12 und 20 vorgesehenen Kanäle 47 zu verschließen. Ebenso ist der in der Antriebswelle 18 vorgesehene Kanal für das Schmiermittel verschlossen.

Infolge der Zentrifugalkraft wird das Drucköl radial nach außen gedrückt und entwickelt eine axial gerichtete Komponente, die jedoch nicht so groß sein darf, daß sie die Kraft der Federn übersteigt, weil sonst der Kolben betätigt würde und gegen die Kraft der Federn die Kupplung ungewollt einrücken könnte. Deshalb ist es erforderlich, daß der radiale Abstand von der Längsachse der Antriebswelle zu der inneren radialen Kante des Dichtsteges korrekt bemessen wird.

Die axiale Kraft der Zentrifugalkraft (hier: hydraulischer Druck resultierend aus der Rotation einer Flüssigkeitssäule) auf den Kolben kann durch Aufstellen der Differentialformel des zentrifugalen Druckgefälles (Wechsel der Zentrifugalkraft gegenüber dem Wechsel des Radius der umlaufenden Flüssigkeitssäule) gemäß, Gleichung 1 ermittelt werden.

Gleichung 1: $\frac{dP}{dr} = \rho \, r \, \omega^2$,

wobei $\rho$ die Öldichte, r der Radius, $\omega$ die Winkelgeschwindigkeit und P der Druck ist. Von Gleichung 1 kann eine Zentrifugalkraftgleichung gemäß, Gleichung 2 abgeleitet werden:

$$\text{Gleichung 2: } F_{ch} = \frac{\pi \rho \omega^2}{4} \left[ Ro^4 - 2Re^2(Ro^2 - Ri^2) - Ri^4 \right],$$

wobei $F_{ch}$ die Kraft aufgrund der Zentrifugalkraft, Ro der Außenradius des Kupplungszylinders, Ri der Innenradius des Kolbens und Re der hydraulische Eingangsradius der Antriebswelle ist. Durch Vereinfachen von $\omega$ von Radianten pro Sekunde in RPM (Umdrehungen pro Minute), Änderung von $\omega$ in N, Ersetzen der Dichte $\rho$ durch spezifisches Gewicht $\gamma$ (lb/ft$^3$ = Pfund pro Kubikfuß) und Kolbenradien durch Zoll wird die Gleichung 2 in die Gleichung 3 umgeformt, wobei 12,91 x 10$^{-9}$ $\pi$ entspricht.

Gleichung 3: $F_{ch} = (12{,}91 \times 10^{-9}) \gamma N^2 x [Ro^4 - 2Re^2(Ro^2 - Ri^2) - Ri^4]$

Aus den Gleichungen 2 und 3 ergibt sich, daß die Zentrifugalkraft im wesentlichen eine Funktion der Quadratgeschwindigkeit und des Kolben-Außenradius zu der 4. Potenz ist. Die Umlaufgeschwindigkeit der Kupplungstrommel ist eine Funktion der Getriebeübersetzungen und Kraftflüsse, während der Außenradius des Kolbens eine Funktion der Kolbengeometrie darstellt. Durch Anordnung des Dichtsteges in den Kolben wird der wirksame Außendurchmesser des Kolbens zum Bilden der Zentrifugalkraft reduziert, so daß hydraulische Flüssigkeit in den Kanälen und einem Teil des Zylinders verbleibt.

**Patentansprüche**

1.  Flüssigkeitsbetätigbare Kupplung mit einem ersten Teil (18), einem an diesem angeordneten Zylinder (34), einem in dem Zylinder (34) verstellbaren Kolben (32) und einem radial innenliegenden Flüssigkeitskanal (44, 47) zum Beaufschlagen des Kolbens (32) und des Zylinders (34) mit Flüssigkeit, damit der Kolben (32) aus einer inaktiven Stellung entgegen der Wirkung von Federn (36) in eine aktivierte Stellung verstellt werden kann, in der der Kolben (32) einen zweiten Teil (16) mit dem ersten Teil (18) reibschlüssig verbindet, dadurch gekennzeichnet, daß zwischen der Stirnfläche des Kolbens (32) und der gegenüberliegenden Wand des Zylinders (34) eine umlaufende und ringförmige Dichtung (54) derart vorgesehen ist, daß in der inaktiven Stellung die Dichtung (54) Kolben (32) und Zylinder (34) auf Abstand hält und zwischen Dichtung (54), Kolben (32) und Zylinder (34) ein innerer und ein äußerer ringförmiger Freiraum entsteht, wobei in der inaktiven Stellung des Kolbens (32) der radial innenliegende Freiraum an seinem äußeren Umfang durch die Dichtung (54) geschlossen, zum Flüssigkeitskanal (44, 47) offen und ständig mit Flüssigkeit gefüllt ist und in der aktivierten Stellung des Kolbens (32) die Wirkung der Dichtung (54) aufgehoben ist.

2.  Kupplung nach Anspruch 1, dadurch gekennzeichnet, daß der Zylinder (34) einen mit Bezug auf die Antriebswelle (18) konzentrisch angeordneten Ringraum bildet, in dem der ringförmig ausgebildete Kolben (32) längsverstellbar ist.

3.  Kupplung nach Anspruch 1 und 2, dadurch gekennzeichnet, daß die Dichtung als ringförmiger, konzentrisch zur Antriebswelle (18) angeordneter, entweder mit der Stirnseite des Kolbens (32) oder mit der dieser gegenüberliegenden Stirnseite (70) des Zylinders verbundener Dichtsteg (54) ausgebildet ist.

4.  Kupplung nach Anspruch 1, dadurch gekennzeichnet, daß der äußere Freiraum mit wenigstens einer Ablaßöffnung (50, 51) versehen ist.

5.  Kupplung nach einem oder mehreren der vorherigen Ansprüche, dadurch gekennzeichnet, daß der Flüssigkeitskanal aus einem in der Antriebswelle (18) angeordneten Kanal (47) und einem in einem Kupplungsgehäuse (45) angeordneten Kanal (44) gebildet ist, wobei ein Kanal (64) zum Schmieren der Kupplung (12, 20) nahe dem Flüssigkeitskanal derart angeordnet ist, daß Schmierflüssigkeit in den Flüssigkeitskanal rinnen kann.

6.  Kupplung nach Anspruch 3, dadurch gekennzeichnet, daß der Dichtsteg (54) durch Abdrehen der Stirnseite des Kolbens (32) gebildet wird.

7.  Kupplung nach Anspruch 5, dadurch gekennzeichnet, daß der innere Freiraum derart angeordnet ist, daß die von der umlaufenden Schmierflüssigkeit im Freiraum hervorgerufene axiale Kraftkomponente kleiner ist als die Kraft der Federn (36).

**Claims**

1.  A fluid-actuable clutch having a first portion (18), a cylinder (34) disposed thereon, a piston (32) displaceable in said cylinder (34) and a radial internal fluid duct (44, 47) for charging the piston (32) and the cylinder (34) with fluid, so that the piston (32) can be displaced out of an inactive position, against the action of springs (36) into an active position in which the piston (32) connects a second portion (16) with the first portion (18) in a friction-locking manner, characterised in that a surrounding annular seal (54) is provided between the end surface of the piston (32) and the facing wall of the cylinder (34), in such a way that, in the inactive position, the seal (54) holds piston (32) and cylinder (34) apart, and there arises between seal (54), piston (32) and cylinder (34) an internal and an external annular free space, the radial internal free space, in the inactive position of the piston (32), being closed at its outer circumference by the seal (54), being open to the fluid duct (44, 47) and permanently filled with fluid, and, in the active position of the piston (32), the action of the seal (54) is interrupted.

2. A clutch according to Claim 1, characterised in that the cylinder (34) forms an annular space which is disposed concentrically with respect to the drive shaft (18), the annularly-designed piston (32) being longitudinally displaceable in said annular space.

3. A clutch according to Claims 1 and 2, characterised in that the seal is designed as a seal web (54) which is annular, disposed concentrically with the drive shaft (18), and connected either to the end surface of the piston (32) or to the end surface (70), lying opposite thereto, of the cylinder.

4. A clutch according to Claim 1, characterised in that the external free space is provided with at least one outlet opening (50, 51).

5. A clutch according to one or more of the preceding Claims, characterised in that the fluid duct is formed from a duct (47) disposed in the drive shaft (18) and a duct (44) disposed in a clutch casing (45), a duct (64) for lubricating the clutch (12, 20) being disposed near the fluid duct in such a way that lubricating fluid can trickle into the fluid duct.

6. A clutch according to Claim 3, characterised in that the seal web (54) is formed by machining off the end surface of the piston (32).

7. A clutch according to Claim 5, characterised in that the inner free space is so disposed that the axial power component generated by the the circulating fluid in the free space is smaller than the power of the springs (36).

**Revendications**

1. Embrayage à commande hydraulique comprenant une première partie (18), un cylindre (34) disposé sur celle-ci, un piston (32) déplaçable dans le cylindre (34) et un canal à liquide (44, 47) situé radialement à l'intérieur pour appliquer du liquide au piston (32) et au cylindre (34), afin que le piston (32) soit amené contre l'action de ressorts (36) d'une position inactive à une position activée, à laquelle le piston (32) établit une liaison par frottement entre une seconde partie (16) et la première partie (18), caractérisé en ce qu'un dispositif tournant et annulaire d'étanchéité (54) est prévu entre la face d'extrémité du piston (32) et la paroi située à l'opposé d'elle du cylindre (34), de manière qu'à la position inactive, ce dispositif d'étanchéité (54) maintienne le piston (32) et le cylindre (34) à distance l'un de l'autre et qu'un espace libre annulaire intérieur et un espace libre annulaire extérieur soient formés entre le dispositif d'étanchéité (54), le piston (32) et le cylindre (34), l'agencement étant tel que, à la position inactive du piston (32), l'espace libre situé radialement à l'intérieur, est fermé à sa périphérie extérieure par le dispositif d'étanchéité (54), s'ouvre vers le canal à liquide (44, 47) et est rempli constamment de liquide et que, à la position activée du piston (32), l'effet du dispositif d'étanchéité (54) est supprimé.

2. Embrayage selon la revendication 1, caractérisé en ce que le cylindre (34) forme une chambre annulaire disposée concentriquement par rapport à l'arbre d'entraînement (18) et dans laquelle est déplaçable longitudinalement le piston (32) de forme annulaire.

3. Embrayage selon les revendications 1 et 2, caractérisé en ce que le dispositif d'étanchéité est réalisé comme une nervure d'étanchéité (54) de forme annulaire, disposée concentriquement par rapport à l'arbre d'entraînement (18) et reliée, soit au côté d'extrémité du piston (32), soit au côté d'extrémité (70) du cylindre situé à l'opposé de lui.

4. Embrayage selon la revendication 1, caractérisé en ce que l'espace libre extérieur présente au moins un orifice d'échappement (50, 51).

**5.** Embrayage selon une ou plusieurs des revendications précédentes, caractérisé en ce que le canal à liquide est composé d'un canal (47) ménagé dans l'arbre d'entraînement (18) et d'un canal (44) ménagé dans un carter d'embrayage (45), un canal (64) pour la lubrification de l'embrayage (12, 20) étant placé à proximité du canal à liquide, de manière que du liquide de lubrification puisse fuir dans le canal à liquide.

**6.** Embrayage selon la revendication 3, caractérisé en ce que la nervure d'étanchéité (54) est formée par enlèvement au tour d'une partie du côté d'extrémité du piston (32).

**7.** Embrayage selon la revendication 5, caractérisé en ce que l'espace libre intérieur est agencé de manière que la composante de force axiale engendrée dans l'espace libre par le liquide de lubrification tournant, soit plus petite que la force des ressorts (36).

Fig. 1

Fig. 2